# EUROPEAN PATENT SPECIFICATION

(11) **EP 3 152 558 B1**
(45) Date of publication and mention of the grant of the patent: **10.07.2024**
(21) Application number: 15736374.8
(22) Date of filing: 28.05.2015
(51) Int. Cl.: G01N 27/22, G01M 3/16

(54) **DEVICE AND METHOD FOR MEASURING CONDENSATION AND/OR ADVANCE OF CORROSION**
VORRICHTUNG UND VERFAHREN ZUR MESSUNG DER KONDENSATION UND/ODER DES KORROSIONSFORTSCHRITTS
DISPOSITIF ET PROCÉDÉ DE MESURE DE CONDENSATION ET/OU DE PROGRESSION DE CORROSION

(30) Priority: 05.06.2014 BE 201400429
(43) Date of publication of application: 12.04.2017
(73) Proprietor: iSensPro NV, 3001 Leuven (BE)
(72) Inventor: DESMET Yves Gabriel Marie-Louis, B-1860 Meise (BE)
(74) Representative: D'Halleweyn, Nele Veerle Trees Gertrudis
(86) International application number: PCT/BE2015/000027
(87) International publication number: WO 2015/184514

(56) References cited:
- WO-A1-2007/006747
- DE-A1- 3 930 530
- DE-A1- 4 021 664
- DE-C1- 3 904 894

## Description

The present invention relates to a device and method for measuring condensation and/or (as a result thereof) advance of corrosion in thermally insulated conduits. In addition, the invention relates to a monitoring controller for use in such a device.

For transport of some fluids it is important that these are subject as little as possible to thermal losses. The conduits for transporting such fluids colder than ambient temperature are therefore typically thermally insulated with vapour-tight insulation or a vapour barrier along the outside. This takes place by enclosing for instance pipelines with insulating shells. Acoustic insulation often also takes place in this way, so that noise nuisance is reduced.

There is however the danger of condensation in such installations. Because the installations are typically exposed to ambient air, and if there is a leak in the encasing vapour barrier, the moisture in the ambient air can condense onto the conduit at the contact surface with the inner side of the insulation. The term corrosion under insulation (CUI) is typically used to describe this. Over a period of time such condensed moisture can result in corrosion of the conduit, whereby the conduit is damaged (the metal corrodes and the conduit eventually loses its flow efficiency, effectiveness, strength and watertightness). It is difficult to remove such condensed moisture and replacing a complete installation is moreover very expensive. Condensation is therefore best detected before the actual corrosion occurs, or in any case as early as possible, so that a less expensive partial replacement of the insulation is possible.

Known systems for measuring condensation on the conduit and the advance of corrosion as a result of condensation make use of thermal cameras for detecting locations with deviating thermal patterns. This solution is not efficient however because it is expensive and cumbersome and for instance does not allow detection of heat and/or cold losses in blind spots. The interpretation of such thermal detection is moreover difficult: it is not clear whether a heat or cold loss can be attributed to a locally thinner insulation or to a vapour barrier leakage.

WO 2007/006747 discloses a method for determining and optionally locating leakage points in pipelines, which are used to transport liquid or gaseous media, by means of at least one electric conductor that runs along the extension of the pipeline from a starting point to an end point. According to the invention, a defined test voltage is applied between two electric conductors, or between one electric conductor and the pipeline and the resistance or impedance behaviour between the starting and end points of the two conductors, or between the conductor and the pipeline is determined when the pipeline is intact. The resistance or impedance behaviour is the determined using the same test voltages at later points in time and is compared with the resistance or impedance behaviour that is known for the intact pipeline. The presence of a leakage point can be ascertained from the deviation of the resistance or impedance behaviour that has been determined at the later points in time from that of the intact pipeline.

DE 40 21 664 discloses a device for determining leaks on an insulated component containing or carrying a flowing medium, wherein the component is surrounded by an insulation, and the insulation by an outer jacket, is designed such that the component and the outer jacket are electrically conducting and are connected as a capacitor such that they form the electrodes of the capacitor, and the insulation acts as a dielectric whose properties change when contaminated by fluid leaking from the component. The component may act as a conductor in a reflectometer so that the location of a leak can be established from the travel time of an applied high-frequency signal.

DE3930530 discloses detecting a leak in a conduit, wherein electrical conductors are arranged at a pitch distance from each other along an insulator that surrounds the conduit. The conduit forms capacitors with the conductors. A portion of the insulator forms the dielectric. Complex impedance of the capacitors is measured, to detect a leak in the conduit. The leak can be attributed to corrosion.

It is an object of the present invention to provide an efficient solution for measuring and/or analysing the formation of condensation and/or the advance of corrosion. Additional objects of the present invention consist of it being simple, inexpensive, durable and accurate.

The invention provides for this purpose a device for measuring condensation and/or advance of corrosion of an electrically conductive conduit according to the appended independent device claim.

'Measuring' is used in this text to indicate that a value is determined for or assigned to a determined quantity, while 'analysis' is understood to mean that something is examined and evaluated in more detail. Related terminology for 'analysis' of CUI includes: 'monitoring', 'detecting', 'tracing', 'inspecting', 'evaluating', 'identifying', 'defining', 'determining'. The choice of 'analysis' is non-limitative.

`Pitch distance' is understood to mean the (more or less) regular distance at which entities are repeated along a carrier. This is specifically understood to mean that the conductors are situated at a (more or less) regularly repeated distance from each other. It is in this way possible to monitor the condensation and/or advance of corrosion of the conduit over the longest possible length of the insulator while still being able to determine with sufficient accuracy the part of the conduit on which condensation and/or advance of corrosion is taking place.

The invention further provides a method for measuring condensation and/or advance of corrosion in an electrically conductive conduit according to the appended independent method claim.

The invention will now be further described with reference to exemplary embodiments shown in the drawing. These exemplary embodiments are intended for the purpose of a better understanding of the above described features, advantages and objectives of the invention; they do not limit the invention in any way.

In the drawing:
figure 1 is a perspective view of an illustrative example of a device for measuring condensation on an electrically conductive conduit and/or advance of corrosion of the conduit ;
figure 2 is a perspective view of an illustrative example of a device for measuring condensation on an electrically conductive conduit and/or advance of corrosion of the conduit ;
figures 3A and 3B are perspective views of several illustrative examples of a device for measuring condensation on an electrically conductive conduit and/or advance of corrosion of the conduit;
figures 4A and 4B show cross-sections of the devices of figures 3A and 3B respectively;
figure 5 shows a cross-section of an illustrative example of a device;
figure 6 shows a cross-section of another illustrative example of a device; and
figures 7A and 7B show two longitudinal sections of embodiments of a device according to the invention wherein the conductors (3A, 3B) which protrude through the cross-sectional plane are also shown.

The same or similar elements are designated in the drawing with the same reference numeral.

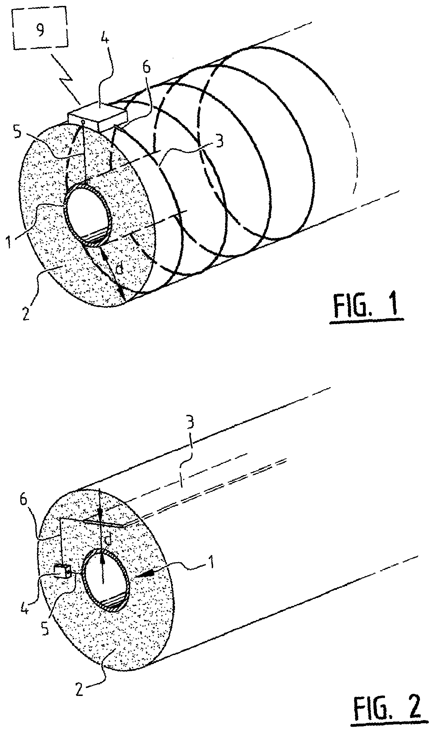

Figure 1 is a perspective view of a part of an illustrative example of a device not falling under the scope of the appended claims but which is suitable for understanding the invention. In this example the device comprises a cylindrical metal conduit 1, such as for instance for transporting coolant. Selected here is a metal conduit, though this is not essential. In some embodiments conduit 1 is manufactured from an electrically conductive material which may be subject to damage from condensation or corrosion, such as for instance metal. In other embodiments a non-metal, electrically non-conductive conduit can also be used which is wrapped or covered (longitudinally or circularly) with an additional electrical conductor such as an (optionally insulated) wire: condensation will in this case be measured and/or analysed and not the advance of corrosion, although condensation is water and can cause damage (leaking water or saturated and therefore heavier and less efficient insulation). In other embodiments a non-metal conduit can be used which is itself manufactured from an electrically conductive material (such as ICP) but which will not be subject to corrosion. Condensation will also be significant in these embodiments, the advance of corrosion hardly or not at all. Arranged around conduit 1 is a likewise cylindrical thermal (or also acoustic) insulator 2 with a thickness d which in this example extends around the whole periphery of conduit 1. It is not essential however for the insulator 2 to extend around the whole periphery of conduit 1, though for the purpose of thermal and/or acoustic efficiency it is preferable. In other embodiments conduit 1 and insulator 2 can take other forms, such as for instance a beam shape, in accordance with requirements for use. It is moreover not necessarily the case that conduit 1 and insulator 2 must per se have a similar shape: embodiments are possible in which conduit 1 is for instance round (as here) and the insulator 2 angular, or vice versa. In this example insulator 2 is arranged along the whole shown length of conduit 1. The thermal and/or acoustic insulation is in this way more effective.

A coil-like conductor 3 is wound around insulator 2. Shown in this example is a single conductor 3, although a plurality of conductors can also be used. This conductor 3 is shown on the outer side of insulator 2, though other embodiments can provide for the conductor 3 to be located (partially) in the insulator 2, for instance in order to protect it better from mechanical damage from outside. In some embodiments conductor 3 can itself be received in a protective coating in order to thus better protect conductor 3 electrically, thermally and/or mechanically. An electrically conductive coating or covering can also serve per se as conductor 3.

The skilled person will appreciate that the placing of conductor 3 ensures here that insulator 2 lies wholly between conduit 1 and conductor 3. In other embodiments only a portion of insulator 2 can lie therebetween, this corresponding to the above provision that conductor 3 can also be located (partially) in insulator 2. Provided for in all cases is that conduit 1 forms a first pole of a capacitor, conductor 3 forms a second pole of this capacitor and the portion of the insulator with thickness d lying therebetween forms part of a dielectric of the capacitor.

This arrangement makes it possible on the basis of the capacitive action of the capacitor to gain more insight into the properties of conduit 1. Condensation and/or advance of corrosion can in this way be measured, since condensate or corrosion on the conduit brings about a changed capacitive action of the capacitor. A measuring instrument 4 is provided for measuring the capacitive action. Measuring instrument 4 is shown here on the outer side of insulator 2 but can likewise be integrated into insulator 2 or be wholly separate thereof. The measuring instrument is coupled 5 with a first terminal to conduit 1 and coupled 6 with a second terminal to conductor 3. Couplings (5, 6) are shown here as electrical conductors running along an efficient path to respectively conduct 1 and conductor 3, although in other embodiments couplings (5, 6) can be guided or provided in other manner.

Measuring instrument 4 is more particularly configured to determine a value representative of this capacitive action, such as for instance a capacitance, a permittivity, a charging time, a discharging time, an oscillation frequency, an oscillation period, a chemical or electrical polarity or bonding, magnetism, a conductivity.

Figure 1 also shows a (generally represented) monitoring controller (9) which communicates wirelessly with the shown measuring instrument 4. Monitoring controller (9) can in this way analyse the condensation and/or the advance of corrosion on the basis of the determined value or values. The skilled person will appreciate that monitoring controller (9) can be automated for the purpose of itself (optionally periodically) analysing the condensation and/or the advance of corrosion and, under determined conditions, notifying this to one or more interested parties, such as the owner or operator of the installation of which conduit 1 forms part or a person hiring out or responsible for the described device. The skilled person will appreciate that the monitoring controller can be equipped for this purpose with adjustable decision logic and communication means.

Figure 2 is a perspective view of a part of another illustrative example of the device not falling under the scope of the appended claims but which is suitable for understanding the invention. In this embodiment the device comprises a cylindrical metal conduit 1 around which a thermal insulator 2 extends similarly to figure 1. In this figure conductor 3 is not however wound in coil form, but an elongate plate is opted for which extends over the length of conduit 1. Plate-like conductor 3 is oriented with a flat side toward conduit 1 at an intermediate distance d. Conductor 3 as shown here is integrated into insulator 2 such that a portion of insulator 2 lies between conduit 1 and conductor 3. The skilled person will again appreciate that such a configuration ensures that conduit 1 forms a first pole of a capacitor, conductor 3 forms a second pole of this capacitor and the portion of the insulator lying therebetween forms a dielectric. Conductor 3 is of a nature such that it extends mainly on one side of conduit 1, whereby the capacitive action is measured substantially on this side. Possibly reduced accuracy on the other side of conduit 1 can for instance be disregarded or factored in when it is anticipated that condensation and/or advance of corrosion will occur only or mainly on the side facing toward conductor 3.

Here too a measuring instrument 4 is provided which can be coupled 5 at a first terminal to conduit 1 and coupled 6 at a second terminal to conductor 3. Measuring instrument 4 is integrated here into insulator 2, but as in figure 1 can likewise be arranged elsewhere depending on the requirements of use. The capacitive action of the capacitor can in this way be measured so that it is possible to measure condensation and/or advance of corrosion in that condensate or corrosion on the conduit brings about a changed capacitive action of the capacitor.

A monitoring controller is not shown in figure 2 (and several of the following figures) because stand-alone use of the device without such a monitoring controller is also possible. The determined values are then used as such to measure the condensation and/or advance of corrosion without additional analysis. A memory space can optionally be provided for this purpose in the or each measuring instrument 4, which memory space can be read. It is also possible to provide for instance a display on which the measured value is shown. According to yet another variant, an alarm device can be provided for generating an alarm when the measured value lies in a predetermined range. Even if a monitoring controller is provided, such a memory space and/or display and/or alarm device can be provided for the or each measuring instrument 4.

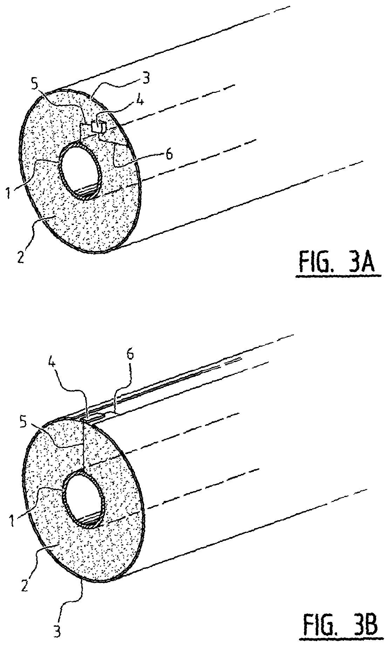

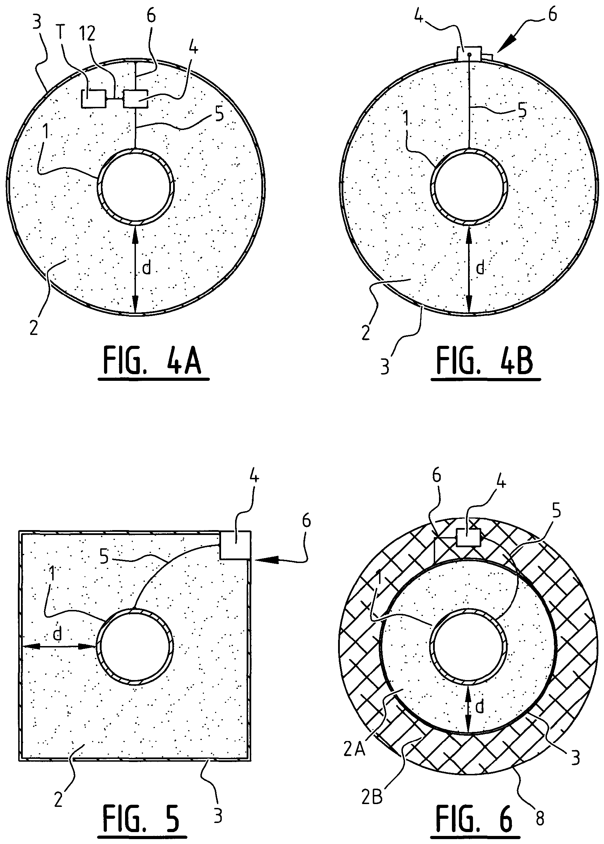

Figures 3A and 3B are perspective views of several illustrative examples of a device not falling under the scope of the appended claims but which is suitable for understanding the invention. Shown in both figures is a metal conduit 1 around which a thermal insulator 2 extends in a manner similar to figures 1 and 2. In figure 3A conductor 3 is provided as a thin-walled cylindrical conductor which encloses insulator 2 all the way round, this along its full length. In other embodiments provision can be made that conductor 3 extends over only a portion of the length of insulator 2, for instance as far as a branch or a protruding meter or valve, and/or that only a portion of the insulator 2 lies between conduit 1 and conductor 3. This latter situation otherwise corresponds to the embodiment shown in figure 6 in respect of insulator 2, which lies only partially (with a portion (2A) as in figure 6) between conduit 1 and conductor 3. Here too conduit 1 forms a first pole of a capacitor, conductor 3 a second pole of this capacitor and the insulator 2 therebetween a dielectric. Further provided is a measuring instrument 4 which can be coupled 5 at a first terminal to conduit 1 and can be coupled 6 at a second terminal to conductor 3. The skilled person will appreciate that this configuration allows the capacitive action of the thus formed capacitor to be measured in advantageous manner or to be further determined in other manner. It is in this way possible to measure the condensation and/or advance of corrosion of the conduit since a change in said capacitive action thereon can indicate that condensate is forming on or at conduit 1 or in the intermediate portion of insulator 2, or that corrosion is (also) occurring on or at conduit 1.

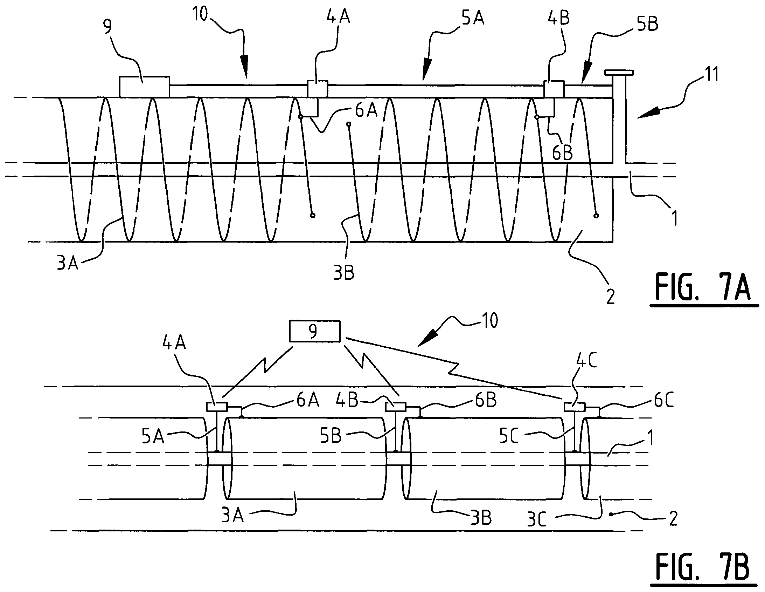

In figure 3B conductor 3 is provided as a thin-walled conductor which does not enclose insulator 2 all the way round: the conductor does not extend over an elongate zone of insulator 2. In this zone a measuring instrument 4 is arranged on insulator 2. An advantage of such an embodiment is that it is in this way possible in simple manner to provide an already insulated 2 conduit 1 at a later time with a conductor 3 and associated measuring instrument 4 - there must after all be little or no change made to the already installed conduit 1 and insulator 2. Measuring instrument 4 can be coupled 5, 6 in similar manner as the measuring instrument of figure 3A, so that the possibility is also created in the case of this embodiment, on the basis of the capacitive action of the thus formed capacitor, of gaining more insight into the condensation and/or advance of corrosion. The shown coupling 5 between measuring instrument 4 and conduit 1 is shown in the figure as a direct conductor. Other embodiments can however provide for this coupling 5 to be made in other manner, for instance by guiding the relevant conductor to an exposed portion of conduit 1, such as an already protruding valve (such as valve (11) in figure 7A) or meter and so on, because such exposed portions do after all have electrically the same (or substantially the same) voltage as conduit 1 itself. This can be advantageous because such exposed portions are more easily accessible by the relevant coupling 5.

Figures 4A and 4B show cross sections of the devices of respectively figures 3A and 3B. Provided in figure 4A, as according to the embodiment shown in figure 3A, is a cylindrical conduit 1 around which extends an insulator 2 which is also cylindrical, thermal (or also acoustic but in any case electrical) and has a thickness d. Extending around the periphery of insulator 2 is a conductor 3, which is embodied here as a thin-walled hollow cylinder. The skilled person will appreciate that other cross-sections are also possible, such as a square or hexagonal conduit 1 and/or insulator 2, without this preventing application of the present device. The configuration ensures that conduit 1 forms a first pole of a capacitor, conductor 3 forms a second pole of this capacitor and insulator 2 (here wholly) therebetween forms a dielectric. The skilled person will appreciate that measurement of the capacitive action of the thus formed capacitor allows simple measurement of the condensation and/or advance of corrosion of conduit 1 using measuring instrument 4. In this embodiment a temperature sensor T is furthermore provided in insulator 2 to measure a temperature. Temperature sensor T is coupled 12 in this embodiment to measuring instrument 4 so that during measurement of the condensation and/or advance of corrosion this latter can take the measured temperature into account because it can affect the capacitive action of the capacitor. The skilled person will appreciate that the thus measured temperature can also be made known to a monitoring controller (not shown) so that it can be taken into account during its analysis of the condensation and/or advance of corrosion. The skilled person will appreciate that it is also possible to provide a plurality of temperature sensors (e.g. a surface temperature sensor and a fluid temperature sensor) or (also) a moisture sensor so as to increase the relevance of the measured or determined value for the capacitive action.

Provided in figure 4, as according to the illustrative example shown in figure 3A, is a cylindrical conduit 1 around which extends an insulator 2 which is also cylindrical, thermal (or also acoustic but in any case electrical) and has a thickness d. Similar observations and advantages as described above for figures 3B and 4A also apply here.

Figure 5 shows a cross-section of an illustrative example of a device not falling under the scope of the appended claims but which is suitable for understanding the invention. Conduit 1 is located centrally here relative to insulator 2, although other embodiments can provide for the conduit to be located not centrally relative to the insulator but for instance further toward one side of this insulator. Arranged around a portion of the periphery of insulator 2 is an electrical conductor 3 which is embodied here as a thin-walled beam-shaped conductor which is (partially) interrupted on one longitudinal edge so that it fits closely around insulator 2, which is also beam-shaped. Conductor 3 is interrupted at one of the four corners and connected to a measuring instrument 4.

Figure 6 shows a cross-section of another illustrative example of a device not falling under the scope of the appended claims but which is suitable for understanding the invention. Provided without loss of generality is a cylindrical metal conduit 1 around which extends an insulator (2A, 2B); in this embodiment insulator (2A, 2B) extends around the whole periphery of conduit 1. A conductor 3 is integrated into insulator (2A, 2B) such that a portion (2A) of the insulator lies with a thickness d between conduit 1 and conductor 3. Another portion (2B) of the insulator does not lie between conduit 1 and conductor 3. In the shown embodiment the choice of the insulating materials of the two portions (2A) and (2B) differs, and the skilled person is free to make this choice depending on the requirements of use. The configuration ensures that conduit 1 forms a first pole of the capacitor, conductor 3 forms a second pole of the capacitor and the intermediate part (2A) a dielectric. A measuring instrument 4 determines a value representative of the capacitive action of the thus formed capacitor in order to thus measure the condensation and/or advance of corrosion of the conduit.

The figure shows that coupling 5 does not extend through (a recess in) conductor 3 but makes contact with conduit 1 in another manner (indicated by the curved connecting line in the drawing) - for instance via an exposed portion of the conduit - in order to prevent a direct electrical conduction occurring between coupling 5 and conductor 3. The skilled person will appreciate that other methods of coupling are also possible provided allowance is made that no direct electrical conduction (short-circuit) occurs between coupling 5 and conductor 3.

Figures 7A and 7B show two longitudinal sections of embodiments of a device according to the invention. Shown in figure 7A without loss of generality is a conduit 1 with a valve (11) thereon. An insulator 2 (shown hatched) is provided over a portion of the length of conduit 1. The skilled person will appreciate that it is not essential for only one insulator 2 to be used but that this simplifies the representation in the figure. Provided are a first conductor (3A) and a second conductor (3B) which protrude out of the cross-sectional plane in the drawing. First conductor (3A) and second conductor (3B) are both wound in coil form around respective portions of the length of insulator 2 in order to thus allow more accurate measurement, or also analysis, over the corresponding portions of conduit 1 of the condensation and/or advance of corrosion. Opted for in this embodiment are wire-like conductors (3A and 3B) which are suitable for winding around insulator 2, although the skilled person will appreciate that conductors (3A, 3B) can also be arranged (partially) in insulator 2. The skilled person will likewise appreciate that it is not essential for all conductors used to have the same form but that, in addition to a conductor wound in coil form, a for instance plate-like conductor can be used, or a rod or a (partially) encasing (round or angled) cassette or a simple conductive wire. Such a configuration ensures that conduit 1 forms a first pole of both a first and a second capacitor, the first conductor (3A) forms a second pole of the first capacitor, the second conductor (3B) forms a second pole of the second capacitor and insulator 2 forms a dielectric for both the first capacitor and the second capacitor. By providing a first measuring instrument (4A) for first conductor (3A) and a second measuring instrument (4B) for second conductor (3B) which can be coupled (5A, 5B) respectively via a first terminal to conduit 1 and which can be coupled (6A, 6B) via a second terminal to respective conductors (3A, 3B), it is possible to determine a value for each conductor (3A, 3B) which is representative of the capacitive action of the corresponding capacitor. It is in this way possible to measure the condensation and/or advance of corrosion of conduit 1. Because a plurality of conductors (3A, 3B) are provided, it is moreover possible to determine more accurately on which portion of conduit 1 condensate is forming or (also) condensation is occurring, so that it is not necessary to replace the whole conduit 1 if an advanced condensation and/or advance of corrosion is only determined locally. Opted for in this exemplary embodiment is to make coupling (5B) to a protruding exposed portion (i.e. a portion which is easily accessible because it is not wholly enclosed by insulator) of conduit 1, that is the valve (11). The skilled person will appreciate that such a coupling to an exposed portion of the conduit can be simpler in determined embodiments than a direct coupling to the conduit. Also provided for in this exemplary embodiment is that coupling (5A) between first measuring instrument (4A) and conduit 1 is made via (a terminal provided on) second measuring instrument (4B) so that the same (or substantially the same) voltage is applied to both the first pole of the first capacitor and the first pole of the second capacitor. The skilled person will appreciate that such an approach allows if desired a simple coupling of the measuring instruments to the conduit.

The skilled person will also appreciate that additional sensors can be provided in simple manner, such as for instance a first temperature sensor (not shown) on an exposed portion such as a branch, a valve 11, an adapter and the like, for the purpose of measuring a fluid temperature, a second temperature sensor (not shown) on an outer side of insulator 2 for the purpose of measuring a surface temperature and/or one or more moisture sensors (not shown) for the purpose of preferably measuring a degree of moisture of the ambient air. These measured temperatures and/or degrees of moisture can be used to increase the precision of other measurements or determinations.

Further provided is a monitoring controller (9) which is configured to analyse the condensation and/or advance of corrosion on the basis of the values determined by the measuring instruments (4A, 4B). In some embodiments a communication cable (not shown) laid parallel to coupling (5A) can also be utilized to transmit the value determined by second measuring instrument (4B) to monitoring controller (9) via first measuring instrument (4A). The skilled person will appreciate that a simple implementation hereof can for instance be a master-slave configuration wherein all measuring instruments thus transmit their determined value in series to the subsequent measuring instrument so as to finally transmit the determined values to monitoring controller (9).

Likewise shown in figure 7B without loss of generality is a conduit 1 over the length of which an insulator 2 extends around its periphery. The same observations apply for insulator 2 as made above in respect of figure 7A. Four conductors (3A, 3B, 3C) are also shown, of which one is only partially visible (not numbered). First conductor (3A), second conductor (3B) and third conductor (3C) are all embodied as an encasing cassette or cage extending around conduit 1 over a part of the length of insulator 2, and are integrated into insulator 2 such that only a portion of insulator 2 lies between conduit 1 and the respective conductors (3A, 3B). The skilled person will appreciate that for convenience of illustration a choice is made for similarly formed conductors, but that this does not represent a limitation of the device. Conduit 1 in this way forms a first pole of a first capacitor, a second capacitor and a third capacitor (and further for the partially shown non-numbered conductors), the first conductor (3A) forms a second pole of the first capacitor, the second capacitor (3B) forms a second pole of the second capacitor, the third conductor (3C) forms a second pole of the third capacitor and the intermediate portion of insulator 2 forms a dielectric for the first, the second and the third capacitor. Providing for each conductor (3A, 3B, 3C) a corresponding measuring instrument (4A, 4B, 4C) which can be coupled 5 via a first terminal to conduit 1 and which can be coupled 6 via a second terminal to the corresponding conductor (3A, 3B, 3C) makes it possible to determine a value representative of the capacitive action of the corresponding capacitors.

Moreover provided is a monitoring controller (9) which remotely communicates wirelessly (10) with measuring instruments (4A, 4B, 4C) which send their determined values thereto for the purpose of analysing the condensation and/or advance of corrosion of conduit 1 on the basis thereof. The monitoring controller can be equipped for this purpose with a memory space in which values representative of the capacitive action of each capacitor can be prestored and can be compared to newly determined values during analysis of the condensation and/or advance of corrosion in order to thus gain a better insight into the change in the capacitive action over a longer period of time. The skilled person will appreciate that such an approach can be automated, for instance in that the monitoring controller (9) itself has a more complex structure and operation, wherein a first analysis is made on-site and/or an analysis is made off-site of the extent to which condensation and/or advance of corrosion has occurred.

Table 1 shows several measurement results from an experimental setup of an embodiment of a device according to the invention for a configuration not displaying any condensation or advance of corrosion. The experimental setup comprised a first conduit having therearound a first conductor separated from the first conduit by a first insulator such that the first conduit formed a first pole of a first capacitor, the first conductor formed a second pole of this first capacitor and the first insulator therebetween formed a first dielectric. The experimental setup also comprised a second conduit having therearound a second conductor separated from the second conduit by a second insulator such that the second conduit formed a first pole of a second capacitor, the second conductor formed a second pole of this second capacitor and the second insulator therebetween formed a second dielectric. In the experimental setup the first conduit and the second conduit were connected electrically to each other (i.e. both conduits brought to the same voltage), though the skilled person will appreciate that one conduit or two non-coupled conduits would also have been possible. A measuring instrument was coupled to both the first capacitor and the second capacitor, wherein each measuring instrument was configured to measure a value for the discharge time of the respective capacitor in order to thereby determine the capacitance of the capacitor. The first measuring instrument functioned as 'master', the second as 'slave' thereof. An ambient temperature sensor was also provided in order to measure an ambient temperature, and two water temperature sensors to measure a first water temperature of the water transported in the first conduit and a second water temperature of the water transported in the second conduit.

Shown in the first column (sensorId) is an identification of the associated measuring instrument: the designation 0 designates the first measuring instrument (the 'master'), the designation 1 designates the second measuring instrument (the 'slave').

Shown in the second column (value) are the values for the corresponding capacitances of the capacitors. These values are expressed in picofarad, and are calculated on the basis of measured discharge times.

Shown in the third column (temperature_ambient) are the measured ambient temperature values.

These are measured by the ambient temperature sensor and are expressed in a unitless representation on the basis of a temperature coefficient (NTC/PTC). The measurements are accurate to whole numbers. The precise value of these ambient temperature values is not important for this measurement set up.

Shown in the fourth column (temperature_water) are the measured water temperatures of the corresponding conduits in a similar representation to that of the ambient temperature values with similar precision and significance.

Shown in the fifth column (timestamp) are the times at which the relevant measurements were performed.

The measurement data were sorted in the table in accordance with: firstly the points in time and secondly the measurement instrument identification, because the sensors 0 and 1 made a measurement alternately. The evolution of the measured values can in this way be clearly followed. It can be seen that the values for the capacitances remain relatively stable within a range of 160 pF to 200 pF for sensor 0 and 620 pF to 680 pF for sensor 1. There is a single spike, such as for instance the value '811' measured at 02-04-2014 14:25:55 for sensor 0. This '811' spike is the result of the device being touched, whereby the effect of the proximity of a human hand on the capacitive action of the capacitor is clearly visible. The skilled person will appreciate that the device can in this way also be utilized for instance to check whether maintenance operations have been performed or to detect or analyse mechanical damage.

Using a second experimental setup of an embodiment of the device according to the invention it was demonstrated that the capacitive action is subject to the influence of condensation for a configuration with artificial introduction of moisture. The experimental setup comprised a conduit having therearound a conductor separated from the first conduit by an insulator such that the conduit formed a first pole of a capacitor, the conductor formed a second pole and the insulator therebetween formed a dielectric. Used in the experimental setup was a mineral wool insulator with aluminium foil on the outer side (so that the insulator was vapour-tight). The skilled person will appreciate that the choice for these materials serves wholly by way of example and that the experimental setup can also be configured in other manner. Coupled to the capacitor was a measuring instrument configured to measure regularly a value of the discharge time of the respective capacitor in order to thus determine the capacitance of the capacitor. An ambient temperature sensor was also provided to measure an ambient temperature and a water temperature sensor to measure a water temperature of the water transported in the conduit.

In the experimental setup moisture (in this case water) was introduced into the insulator (so into the dielectric) from a determined point in time T using a syringe so as to thus enable accelerated simulation of condensation. Before point in time T the determined capacitance values lay between 0 nF and 1 nF in a substantially constant progression. After point in time T (so when moisture was introduced in order to thus simulate artificial condensation) the determined capacitance values fluctuated (with large shocks) between 16 nF and 133 nF, including a correction for temperature differences. The thus obtained results clearly demonstrate that the capacitive action of the capacitor formed by the experimental setup was affected by the presence of moisture in the insulator (the dielectric).

The skilled person will understand that many modifications and variants can be envisaged within the scope of the invention, which is defined solely by the following claims.

**Table 1**

| sensorId | value | temperature_ambient | | | temperature_water | timestamp |
|---|---|---|---|---|---|---|
| | 0 | 169 | 469 | 466 | 02-04-2014 14:23:51 | |
| | 0 | 165 | 469 | 466 | 02-04-2014 14:24:53 | |
| | 0 | 811 | 470 | 466 | 02-04-2014 14:25:55 | |
| | 0 | 170 | 469 | 467 | 02-04-2014 14:29:46 | |
| | 0 | 166 | 470 | 467 | 02-04-2014 14:30:48 | |
| | 0 | 166 | 470 | 467 | 02-04-2014 14:31:50 | |
| | 0 | 172 | 471 | 467 | 02-04-2014 14:32:51 | |
| | 0 | 165 | 471 | 467 | 02-04-2014 14:33:53 | |
| | 0 | 173 | 471 | 467 | 02-04-2014 14:34:55 | |
| | 0 | 166 | 471 | 467 | 02-04-2014 14:35:57 | |
| | 0 | 164 | 469 | 467 | 02-04-2014 14:36:59 | |
| | 0 | 165 | 468 | 467 | 02-04-2014 14:38:00 | |
| | 0 | 207 | 467 | 467 | 02-04-2014 14:39:02 | |
| | 0 | 158 | 466 | 467 | 02-04-2014 14:40:04 | |
| | 0 | 165 | 465 | 467 | 02-04-2014 14:41:06 | |
| | 0 | 165 | 465 | 467 | 02-04-2014 14:42:08 | |
| | 0 | 167 | 464 | 467 | 02-04-2014 14:43:10 | |
| | 0 | 163 | 464 | 467 | 02-04-2014 14:44:12 | |
| | 0 | 160 | 464 | 467 | 02-04-2014 14:45:14 | |
| | 0 | 168 | 463 | 467 | 02-04-2014 14:46:15 | |
| | 0 | 167 | 464 | 467 | 02-04-2014 14:47:17 | |
| | 0 | 165 | 463 | 467 | 02-04-2014 14:48:19 | |
| | 0 | 165 | 463 | 467 | 02-04-2014 14:49:21 | |
| | 0 | 165 | 463 | 467 | 02-04-2014 14:50:22 | |
| | 0 | 164 | 464 | 467 | 02-04-2014 14:51:24 | |
| | 0 | 165 | 463 | 467 | 02-04-2014 14:52:26 | |
| | 0 | 165 | 464 | 467 | 02-04-2014 14:53:28 | |
| | 0 | 160 | 464 | 467 | 02-04-2014 14:54:30 | |
| | 0 | 165 | 463 | 467 | 02-04-2014 14:55:31 | |
| | 0 | 165 | 463 | 467 | 02-04-2014 14:56:33 | |
| | 0 | 163 | 463 | 467 | 02-04-2014 14:57:35 | |
| | 0 | 162 | 464 | 469 | 03-04-2014 10:34:16 | |
| | 0 | 164 | 464 | 469 | 03-04-2014 10:35:17 | |
| | 1 | 644 | 490 | 469 | 03-04-2014 10:35:18 | |
| | 0 | 203 | 464 | 469 | 03-04-2014 10:36:20 | |
| | 1 | 681 | 486 | 469 | 03-04-2014 10:36:20 | |
| | 0 | 168 | 464 | 469 | 03-04-2014 10:37:23 | |
| | 1 | 637 | 486 | 469 | 03-04-2014 10:37:23 | |
| | 0 | 170 | 464 | 469 | 03-04-2014 10:38:25 | |
| | 1 | 639 | 486 | 469 | 03-04-2014 10:38:25 | |
| | 0 | 157 | 464 | 469 | 03-04-2014 10:39:27 | |
| | 0 | 163 | 465 | 469 | 03-04-2014 10:40:29 | |
| | 1 | 632 | 486 | 469 | 03-04-2014 10:40:30 | |
| | 0 | 173 | 465 | 469 | 03-04-2014 10:41:32 | |
| | 1 | 635 | 486 | 469 | 03-04-2014 10:41:32 | |
| | 0 | 162 | 466 | 469 | 03-04-2014 10:42:34 | |
| | 1 | 635 | 487 | 469 | 03-04-2014 10:42:34 | |
| | 0 | 170 | 466 | 469 | 03-04-2014 10:43:37 | |
| | 1 | 635 | 486 | 469 | 03-04-2014 10:43:37 | |

## Claims

1. Device for measuring condensation on an electrically conductive conduit (1) and/or advance of corrosion of the conduit (1), comprising:
- an insulator (2) configured to extend around the conduit (1);
- a plurality of electrical conductors (3A, 3B, 3C) arranged at a pitch distance from each other along the insulator, seen in a length direction of the conduit, wherein each conductor is arranged such that, in use, at least a portion (2A) of the insulator (2) lies between the conduit (1) and said conductor (3A, 3B, 3C) such that the conduit (1) forms a first pole of a capacitor, said conductor (3A, 3B, 3C) forms a second pole of this capacitor, and the portion (2, 2A) therebetween forms a dielectric;
**characterised by**
- a plurality of measuring instruments (4A, 4B, 4C); wherein each measuring instrument thereof is configured to determine for a corresponding conductor of the plurality of conductors (3A, 3B, 3C) a value which is representative of the capacitive action of the corresponding capacitor; and
- a monitoring controller (9) which is configured to analyse condensation on the conduit (1) and/or advance of corrosion of the conduit (1) on the basis of the values determined by the plurality of measuring instruments (4A, 4B, 4C).

2. The device as claimed in claim 1, wherein each measuring instrument (4A, 4B, 4C) is configured to determine a value for one or more of the following parameters: a capacitance, a permittivity, a charging time, a discharging time, an oscillation frequency, an oscillation period, a chemical or electrical polarity or bonding, magnetism and a conductivity.

3. The device as claimed in either of the foregoing claims, wherein the plurality of electrical conductors (3A, 3B, 3C) are one of the following:
- a conductor (3A, 3B, 3C) wound in coil form arranged around or in the insulator (2);
- a longitudinal conductor (3A, 3B, 3C) arranged in or on the insulator (2); and
- a conductive coating or covering for the insulator (2).

4. The device as claimed in any one of the previous claims, comprising at least one temperature sensor configured to measure a temperature, preferably at the position of the insulator (2), and/or at least one moisture sensor configured to measure a degree of moisture; wherein the monitoring controller (9) is configured during analysis of the condensation and/or the advance of corrosion to take into account the measured temperature and/or the measured degree of moisture.

5. The device as claimed in claim 4, wherein each measuring instrument and/or the monitoring controller comprises a memory space configured to store at least one predetermined reference value for each capacitor; and wherein the monitoring controller (9) is configured to:
- compare the value determined by each measuring instrument (4A, 4B, 4C) to the corresponding reference value; and
- analyse the condensation and/or advance of corrosion on the basis of the deviation between the determined value and the reference value.

6. The device as claimed in claim 4 or 5, wherein the monitoring controller is located remotely of the at least one measuring instrument, and each measuring instrument (4A, 4B, 4C) is configured to transmit the determined value to the monitoring controller (9).

7. The device as claimed in any of the foregoing claims, wherein:
- each measuring instrument (4A, 4B, 4C) comprises a first terminal and a second terminal;
- the first terminal is coupled (5) to the conduit (1); and
- the second terminal is coupled (6) to the corresponding conductor (3A, 3B, 3C).

8. The device as claimed in any of the foregoing claims, wherein each measuring instrument (4A, 4B, 4C) is configured to determine the representative value periodically.

9. The device as claimed in any of the foregoing claims, wherein each conductor (3A, 3B, 3C) is received in a protective coating.

10. Method for measuring condensation and/or advance of corrosion in an electrically conductive conduit (1), comprising:
- arranging an insulator (2) around the conduit (1);
- arranging a plurality of conductors (3A, 3B, 3C) at pitch distance from each other along the insulator (2), seen in a length direction of the conduit, such that, for each conductor thereof, at least a portion (2A) of the insulator (2) lies between the conduit (1) and the conductor (3A, 3B, 3C), and that the conduit (1) forms a first pole of a capacitor, the conductor (3A, 3B, 3C) forms a second pole of the capacitor and the portion (2, 2A) therebetween forms a dielectric;
**characterised by** the steps of
- determining for each conductor (3A, 3B, 3C) a value representative of the capacitive action of the corresponding capacitor; and
- analysing condensation on the conduit (1) and/or advance of corrosion of the conduit (1) on the basis of the determined values.

11. The method as claimed in claim 10, wherein the determination comprises:
determining a value for one or more of the following parameters: a capacitance, a permittivity, a charging time, a discharging time, an oscillation frequency, an oscillation period, a chemical or electrical polarity or bonding, magnetism and a conductivity.

12. The method as claimed in claim 10 or 11, comprising:
- measuring a temperature, preferably at the position of the insulator (2); and/or
- measuring a degree of moisture; and
wherein the measured temperature and/or the measured degree of moisture are taken into account during analysis of the condensation and/or advance of corrosion.

13. The method as claimed in any one of the claims 10-12, wherein the analysis comprises:
- storing at least one predetermined reference value for each capacitor;
- comparing each determined value to the corresponding reference value; and
- analysing the condensation and/or advance of corrosion on the basis of the deviation between the determined value and the reference value.

14. The method as claimed in any of the claims 10-13, wherein the analysis is performed by a monitoring controller remotely of the conduit, and the determined values representative of the capacitive action of the corresponding capacitor are communicated to the monitoring controller.

## Patentansprüche

1. Vorrichtung zum Messen von Kondensation an einer elektrisch leitfähigen Leitung (1) und/oder Fortschritt von Korrosion der Leitung (1), umfassend:
- einen Isolator (2), der konfiguriert ist, um sich um die Leitung (1) herum zu erstrecken;
- eine Vielzahl von elektrischen Leitern (3A, 3B, 3C), die in einem Teilungsabstand voneinander entlang des Isolators angeordnet sind, in einer Längsrichtung der Leitung gesehen, wobei jeder Leiter derart angeordnet ist, dass bei Verwendung mindestens ein Abschnitt (2A) des Isolators (2) zwischen der Leitung (1) und dem Leiter (3A, 3B, 3C) derart liegt, dass die Leitung (1) einen ersten Pol eines Kondensators ausbildet, der Leiter (3A, 3B, 3C) einen zweiten Pol dieses Kondensators ausbildet und der Abschnitt (2, 2A) dazwischen ein Dielektrikum ausbildet;
**gekennzeichnet durch**
- eine Vielzahl von Messinstrumenten (4A, 4B, 4C); wobei jedes Messinstrument davon konfiguriert ist, um für einen entsprechenden Leiter der Vielzahl von Leitern (3A, 3B, 3C) einen Wert zu bestimmen, der für die kapazitive Wirkung des entsprechenden Kondensators repräsentativ ist; und
- eine Überwachungssteuerung (9), die konfiguriert ist, um Kondensation auf der Leitung (1) und/oder Fortschritt von Korrosion der Leitung (1) auf der Grundlage der Werte zu analysieren, die durch die Vielzahl von Messinstrumenten (4A, 4B, 4C) bestimmt werden.

2. Vorrichtung nach Anspruch 1, wobei jedes Messinstrument (4A, 4B, 4C) konfiguriert ist, um einen Wert für einen oder mehrere der folgenden Parameter zu bestimmen: eine Kapazität, eine Permittivität, eine Ladezeit, eine Entladezeit, eine Schwingungsfrequenz, eine Schwingungsperiode, eine chemische oder elektrische Polarität oder Bindung, Magnetismus und eine Leitfähigkeit.

3. Vorrichtung nach einem der vorstehenden Ansprüche, wobei die Vielzahl von elektrischen Leitern (3A, 3B, 3C) eine der Folgenden sind:
- ein Leiter (3A, 3B, 3C), der in Spulenform gewickelt ist, die um den Isolator (2) herum oder in diesem angeordnet ist;
- ein Längsleiter (3A, 3B, 3C), der in oder an dem Isolator (2) angeordnet ist; und
- eine leitfähige Beschichtung oder Abdeckung für den Isolator (2).

4. Vorrichtung nach einem der vorstehenden Ansprüche, umfassend mindestens einen Temperatursensor, der konfiguriert ist, um eine Temperatur zu messen, vorzugsweise an der Position des Isolators (2), und/oder mindestens einen Feuchtigkeitssensor, der konfiguriert ist, um einen Feuchtigkeitsgrad zu messen; wobei die Überwachungssteuerung (9) während der Analyse der Kondensation und/oder des Fortschritts von Korrosion konfiguriert ist, um die gemessene Temperatur und/oder den gemessenen Feuchtigkeitsgrad zu berücksichtigen.

5. Vorrichtung nach Anspruch 4, wobei jedes Messinstrument und/oder die Überwachungssteuerung einen Speicherplatz umfasst, der konfiguriert ist, um mindestens einen vorbestimmten Referenzwert für jeden Kondensator zu speichern; und wobei die Überwachungssteuerung (9) konfiguriert ist zum:
- Vergleichen des Werts, der durch jedes Messinstrument (4A, 4B, 4C) bestimmt wird, mit dem entsprechenden Referenzwert; und
- Analysieren der Kondensation und/oder des Fortschritts von Korrosion auf der Grundlage der Abweichung zwischen dem bestimmten Wert und dem Referenzwert.

6. Vorrichtung nach Anspruch 4 oder 5, wobei sich die Überwachungssteuerung von dem mindestens einen Messinstrument entfernt befindet und jedes Messinstrument (4A, 4B, 4C) konfiguriert ist, um den bestimmten Wert an die Überwachungssteuerung (9) zu übertragen.

7. Vorrichtung nach einem der vorstehenden Ansprüche, wobei:
- jedes Messinstrument (4A, 4B, 4C) einen ersten Anschluss und einen zweiten Anschluss umfasst;
- der erste Anschluss (5) mit der Leitung (1) gekoppelt ist; und
- der zweite Anschluss (6) mit dem entsprechenden Leiter (3A, 3B, 3C) gekoppelt ist.

8. Vorrichtung nach einem der vorstehenden Ansprüche, wobei jedes Messinstrument (4A, 4B, 4C) konfiguriert ist, um den repräsentativen Wert periodisch zu bestimmen.

9. Vorrichtung nach einem der vorstehenden Ansprüche, wobei jeder Leiter (3A, 3B, 3C) in einer Schutzbeschichtung aufgenommen ist.

10. Verfahren zum Messen von Kondensation und/oder Fortschritt von Korrosion in einer elektrisch leitfähigen Leitung (1), umfassend:
- Anordnen eines Isolators (2) um die Leitung (1) herum;
- derartiges Anordnen einer Vielzahl von Leitern (3A, 3B, 3C) in einem Teilungsabstand voneinander entlang des Isolators (2), in einer Längsrichtung der Leitung gesehen, dass für jeden Leiter davon mindestens ein Abschnitt (2A) des Isolators (2) zwischen der Leitung (1) und dem Leiter (3A, 3B, 3C) liegt, und dass die Leitung (1) einen ersten Pol eines Kondensators ausbildet, der Leiter (3A, 3B, 3C) einen zweiten Pol des Kondensators ausbildet und der Abschnitt (2, 2A) dazwischen ein Dielektrikum ausbildet;
**gekennzeichnet durch** die Schritte
- Bestimmen eines Werts für jeden Leiter (3A, 3B, 3C), der für die kapazitive Wirkung des entsprechenden Kondensators repräsentativ ist; und
- Analysieren von Kondensation auf der Leitung (1) und/oder des Fortschritts von Korrosion der Leitung (1) auf der Grundlage der bestimmten Werte.

11. Verfahren nach Anspruch 10, wobei die Bestimmung umfasst:
Bestimmen eines Werts für einen oder mehrere der folgenden Parameter: eine Kapazität, eine Permittivität, eine Ladezeit, eine Entladezeit, eine Schwingungsfrequenz, eine Schwingungsperiode, eine chemische oder elektrische Polarität oder Bindung, Magnetismus und eine Leitfähigkeit.

12. Verfahren nach Anspruch 10 oder 11, umfassend:
- Messen einer Temperatur, vorzugsweise an der Position des Isolators (2); und/oder
- Messen eines Feuchtigkeitsgrades; und
wobei die gemessene Temperatur und/oder der gemessene Feuchtigkeitsgrad während der Analyse der Kondensation und/oder des Fortschritts von Korrosion berücksichtigt werden.

13. Verfahren nach einem der Ansprüche 10 bis 12, wobei die Analyse umfasst:
- Speichern mindestens eines vorbestimmten Referenzwerts für jeden Kondensator;
- Vergleichen jedes bestimmten Werts mit dem entsprechenden Referenzwert; und
- Analysieren der Kondensation und/oder des Fortschritts von Korrosion auf der Grundlage der Abweichung zwischen dem bestimmten Wert und dem Referenzwert.

14. Verfahren nach einem der Ansprüche 10 bis 13, wobei die Analyse durch eine Überwachungssteuerung entfernt von der Leitung durchgeführt wird und die bestimmten Werte, die für die kapazitive Wirkung des entsprechenden Kondensators repräsentativ sind, an die Überwachungssteuerung übermittelt werden.

## Revendications

1. Dispositif de mesure de la condensation sur un conduit électroconducteur (1) et/ou de la progression de la corrosion du conduit (1), comprenant :
- un isolateur (2) conçu pour s'étendre autour du conduit (1) ;
- une pluralité de conducteurs électriques (3A, 3B, 3C) disposés à une distance de pas les uns des autres le long de l'isolateur, vu dans une direction de la longueur du conduit, dans lequel chaque conducteur est disposé de telle sorte que, lors de l'utilisation, au moins une partie (2A) de l'isolateur (2) se situe entre le conduit (1) et ledit conducteur (3A, 3B, 3C) de sorte que le conduit (1) forme un premier pôle d'un condensateur, ledit conducteur (3A, 3B, 3C) forme un second pôle de ce condensateur, et la partie (2, 2A) entre ceux-ci forme un diélectrique ;
**caractérisé par**
- une pluralité d'instruments de mesure (4A, 4B, 4C) ; dans lequel chaque instrument de mesure de ceux-ci est configuré pour déterminer pour un conducteur correspondant de la pluralité de conducteurs (3A, 3B, 3C) une valeur qui est représentative de l'action capacitive du condensateur correspondant ; et
- un dispositif de commande de surveillance (9) qui est configuré pour analyser la condensation sur le conduit (1) et/ou la progression de la corrosion du conduit (1) sur la base des valeurs déterminées par la pluralité d'instruments de mesure (4A, 4B, 4C).

2. Dispositif selon la revendication 1, dans lequel chaque instrument de mesure (4A, 4B, 4C) est configuré pour déterminer une valeur pour un ou plusieurs des paramètres suivants : une capacité, une permittivité, un temps de charge, un temps de décharge, une fréquence d'oscillation, une période d'oscillation, une polarité ou un liage chimique ou électrique, un magnétisme et une conductivité.

3. Dispositif selon l'une des revendications précédentes, dans lequel la pluralité de conducteurs électriques (3A, 3B, 3C) sont l'un des suivants :
- un conducteur (3A, 3B, 3C) enroulé en forme de bobine disposé autour ou dans l'isolateur (2) ;
- un conducteur (3A, 3B, 3C) longitudinal disposé dans ou sur l'isolateur (2) ; et
- un enduit ou revêtement conducteur pour l'isolateur (2).

4. Dispositif selon l'une quelconque des revendications précédentes, comprenant au moins un capteur de température configuré pour mesurer une température, de préférence au niveau de la position de l'isolateur (2), et/ou au moins un capteur d'humidité configuré pour mesurer un degré d'humidité ; dans lequel le dispositif de commande de surveillance (9) est configuré pour, pendant l'analyse de la condensation et/ou de la progression de la corrosion, prendre en compte la température mesurée et/ou le degré d'humidité mesuré.

5. Dispositif selon la revendication 4, dans lequel chaque instrument de mesure et/ou le dispositif de commande de surveillance comprend un espace mémoire configuré pour stocker au moins une valeur de référence prédéterminée pour chaque condensateur ; et dans lequel le dispositif de commande de surveillance (9) est configuré pour :
- comparer la valeur déterminée par chaque instrument de mesure (4A, 4B, 4C) à la valeur de référence correspondante ; et
- analyser la condensation et/ou la progression de la corrosion sur la base de l'écart entre la valeur déterminée et la valeur de référence.

6. Dispositif selon la revendication 4 ou 5, dans lequel le dispositif de commande de surveillance est situé à distance de l'au moins un instrument de mesure, et chaque instrument de mesure (4A, 4B, 4C) est configuré pour transmettre la valeur déterminée au dispositif de commande de surveillance (9).

7. Dispositif selon l'une quelconque des revendications précédentes, dans lequel :
- chaque instrument de mesure (4A, 4B, 4C) comprend un premier terminal et un second terminal ;
- le premier terminal est couplé (5) au conduit (1) ; et
- le second terminal est couplé (6) au conducteur (3A, 3B, 3C) correspondant.

8. Dispositif selon l'une quelconque des revendications précédentes, dans lequel chaque instrument de mesure (4A, 4B, 4C) est configuré pour déterminer périodiquement la valeur représentative.

9. Dispositif selon l'une quelconque des revendications précédentes, dans lequel chaque conducteur (3A, 3B, 3C) est reçu dans un revêtement protecteur.

10. Procédé de mesure de la condensation et/ou de la progression de la corrosion dans un conduit électroconducteur (1), comprenant :
- la disposition d'un isolateur (2) autour du conduit (1) ;
- la disposition d'une pluralité de conducteurs (3A, 3B, 3C) à une distance de pas les uns des autres le long de l'isolateur (2), vu dans une direction de la longueur du conduit, de sorte que, pour chaque conducteur de ceux-ci, au moins une partie (2A) de l'isolateur (2) se situe entre le conduit (1) et le conducteur (3A, 3B, 3C), et que le conduit (1) forme un premier pôle d'un condensateur, le conducteur (3A, 3B, 3C) forme un second pôle du condensateur et la partie (2, 2A) entre ceux-ci forme un diélectrique ;
**caractérisé par** les étapes consistant à
- déterminer pour chaque conducteur (3A, 3B, 3C) une valeur représentative de l'action capacitive du condensateur correspondant ; et
- analyser la condensation sur le conduit (1) et/ou la progression de la corrosion du conduit (1) sur la base des valeurs déterminées.

11. Procédé selon la revendication 10, dans lequel la détermination comprend :
la détermination d'une valeur d'un ou de plusieurs des paramètres suivants : une capacité, une permittivité, un temps de charge, un temps de décharge, une fréquence d'oscillation, une période d'oscillation, une polarité ou un liage chimique ou électrique, un magnétisme et une conductivité.

12. Procédé selon la revendication 10 ou 11, comprenant :
- la mesure d'une température, de préférence au niveau de la position de l'isolateur (2) ; et/ou
- la mesure d'un degré d'humidité ; et
dans lequel la température mesurée et/ou le degré d'humidité mesuré sont pris en compte pendant l'analyse de la condensation et/ou de la progression de la corrosion.

13. Procédé selon l'une quelconque des revendications 10 à 12, dans lequel l'analyse comprend :
- le stockage d'au moins une valeur de référence prédéterminée pour chaque condensateur ;
- la comparaison de chaque valeur déterminée à la valeur de référence correspondante ; et
- l'analyse de la condensation et/ou de la progression de la corrosion sur la base de l'écart entre la valeur déterminée et la valeur de référence.

14. Procédé selon l'une quelconque des revendications 10 à 13, dans lequel l'analyse est effectuée par un dispositif de commande de surveillance situé à distance du conduit, et les valeurs déterminées représentatives de l'action capacitive du condensateur correspondant sont communiquées au dispositif de commande de surveillance.
